# EUROPEAN PATENT SPECIFICATION

(11) **EP 3 738 835 B1**
(45) Date of publication and mention of the grant of the patent: **03.01.2024**
(21) Application number: 20173366.4
(22) Date of filing: 07.05.2020
(51) Int. Cl.: B60R 16/02

(54) **RETENTION SYSTEM AND METHOD FOR AN ELECTRICAL PLUG OUTLET INSIDE A VEHICLE**
RÜCKHALTESYSTEM UND VERFAHREN FÜR EINE ELEKTRISCHE STECKDOSE IN EINEM FAHRZEUG
SYSTÈME DE RÉTENTION ET PROCÉDÉ DE SORTIE DE PRISE ÉLECTRIQUE À L'INTÉRIEUR D'UN VÉHICULE

(30) Priority: 13.05.2019 ES 201930417
(43) Date of publication of application: 18.11.2020
(73) Proprietor: Seat, S.A., 08760 Martorell (ES)
(72) Inventor: HERRERA GENÉ, Joaquín, 08760 Martorell (ES); COLET GALÍ, Joan, 08760 Martorell (ES)
(74) Representative: Elzaburu S.L.P.

(56) References cited:
- EP-A2- 1 962 404
- CN-U- 205 344 727
- JP-A- H0 974 666
- US-B1- 7 175 217

## Description

### Object of the invention

The object of the present invention is, according to a first aspect, a retention system for an electrical plug outlet in the interior of a vehicle, which significantly reduces the complexity of the assembly operations of the electrical plug outlet inside the vehicle.

A second aspect of the present invention relates to an inner cladding of a vehicle, which incorporates the retention system of the first aspect of the invention, particularly applicable to motor vehicle boots.

A third aspect of the present invention relates to a retention method for an electrical plug outlet in the interior of a vehicle which is especially applicable to the scope of the industry dedicated to the design, manufacture and marketing of motor vehicles.

### Background of the invention and technical problem to solve

Nowadays, car boots are usually covered with a carpet plate or sheet (or inner cladding of the boot), providing higher quality surface finish to the inside of the boot on the entire visible surface thereof. Said carpet part is not firmly adhered to the chassis or body of the vehicle. Likewise, the carpet part has a lower mechanical resistance than that of the structural elements of the chassis or body of the vehicle. However, since the carpet part is supported on the chassis, the mechanical resistance thereof is sufficient to withstand the type of stress to which it is subjected by contact with luggage items that are arranged and housed inside the boot without deforming.

There are currently vehicles that incorporate electrical outlets, not only in the driver and passenger compartment, but also in the boot. A prior art example of a vehicle with an incorporated electrical outlet is described in US7175217.

These electrical outlets enable household appliances to be connected. This feature is useful, especially in situations where once the vehicle is parked, it is going to remain in proximity to the same and electrical devices that need to be connected to an electrical outlet are to be used. On the other hand, electrical outlets can also be used with the vehicle in motion or parked to charge an electric battery of a micro-mobility vehicle, such as an electric scooter.

As already introduced, the carpet part has low pressure resistance and low fatigue resistance. The insertion and removal movements of the pin are typically considered to entail an average force of 60 N, applied to a relatively small surface area, such as that of the plug pin.

Thus, given the high stresses that a plug requires in terms of pressure exerted by the plug pin and fatigue due to continuous insertions and removals over time, the provisions of electrical outlets in boots currently require complex installations that involve, in vehicles with an electrical outlet in the boot, a complete redesign of the carpet part that increases the cost, weight and rigidity thereof. In some solutions proposed in the state of the art, the provision of an electrical outlet in the boot of a vehicle involves welding the support of the electrical outlet assembly to the chassis of the vehicle. This arrangement makes the manufacture of the vehicle more expensive, and hinders possible maintenance tasks of said electrical outlet.

### Description of the invention

In order to solve the aforementioned drawbacks, the present invention relates to a retention system according to claim 1 and method according to claim 10 for an electrical plug outlet in the interior of a vehicle, which has a simple configuration and great simplicity and versatility in the installation thereof and in accessibility for maintenance, while also providing great stability and mechanical resistance against the stresses required by an element of this type.

The retention system for an electrical plug outlet inside a vehicle, object of the present invention, incorporates:
- a support plate configured to be anchored to a body of a vehicle by means of anchoring means; wherein the support plate comprises a plug socket casing defining a first housing configured to receive the electrical plug outlet;
- a reinforcing plate, configured to be mechanically attached, in an assembled position, to the support plate and configured to be fixed to a cladding part inside the vehicle.

The reinforcing plate comprises a closed curve or closed polygon geometry such that it defines an opening to receive the electrical plug outlet to be housed in the plug socket casing. Likewise, the reinforcing plate and the support plate comprise fixing means for fixing the reinforcing plate to a flange of the plug socket casing.

Given the above features, a retention system is provided that, while being fixed to the cladding part, transmits the pressure exerted by the plug pin directly to the vehicle body, making it so that the cladding part is not the part that has to support the demanding stresses in terms of pressure and fatigue of the pin on the electrical plug outlet. This is accomplished by anchoring the support plate to the body of the vehicle, and by fixing the reinforcing plate to the support plate.

Preferably, the support plate defines a second housing configured to receive a transformer. This transformer is configured to convert a direct current delivered by a battery of the vehicle into an alternating current.

According to a preferred embodiment of the retention system, the fixing means for fixing the reinforcing plate to the support plate comprise at least one tab located on a perimeter edge of the reinforcing plate defining the opening. Similarly, the aforementioned fixing means comprise at least one protrusion located on the edge of the plug socket casing and in correspondence with the at least one tab of the reinforcing plate. The at least one protrusion is configured to be inserted into the at least one tab, thus preventing relative transverse displacement between the at least one protrusion and the at least one tab, with the reinforcing plate being in the assembled position thereof.

When "transverse displacement" is mentioned, a direction transverse or perpendicular to the insertion direction of the protrusion in the tab or, in other words, a direction parallel to the insertion/removal direction of the plug pin in the electrical plug outlet is being referred to.

According to a possible embodiment of the retention system, the at least one tab comprises a proximal end substantially parallel to the perimeter edge of the reinforcing plate, being configured to house the at least one protrusion between said proximal end and the perimeter edge of the reinforcing plate.

Thus, preferably, the thickness of the at least one protrusion is substantially equal to the space defined between the proximal end of the tab and the perimeter edge of the reinforcing plate.

Likewise, according to a possible embodiment, the at least one tab comprises a distal end arranged at a distance from the perimeter edge of the reinforcing plate greater than the distance from the proximal end. Thus, the distal end is configured to guide the at least one protrusion during the operation of assembling the reinforcing plate on the support plate. Thus, preferably, the at least one tab comprises a ramp-like structure between the proximal end and the distal end, such that the distance between the tab and the perimeter edge of the reinforcing plate increases continuously between said proximal end and said distal end. In this way, the assembly of the reinforcing plate on the support plate is facilitated, since when the reinforcing plate is brought closer to the support plate, each protrusion will be placed without too much difficulty between the distal end of the tab and the perimeter edge of the reinforcing plate, and a simple movement in the longitudinal direction (vertical direction or direction perpendicular to the insertion/removal direction of the plug pin) will suffice for the entire protrusion to be perfectly inserted in the space between the tab and the perimeter edge of the reinforcing plate.

According to a possible embodiment, the at least one tab comprises a recess and the at least one protrusion comprises a projection, said projection being configured to be retained by the recess of the tab, thus preventing relative longitudinal displacement between the at least one protrusion and the at least one tab.

In the case that the edge of the plug socket casing has upper and lower protrusions, and the perimeter edge of the reinforcing plate has upper and lower tabs, the projection is preferably present on the lower protrusions and the recesses are preferably present on the lower tabs.

According to the invention, the plug socket casing comprises retaining means configured to retain the electrical plug outlet in the first housing of the support plate.

According to a possible embodiment, these retaining means comprise a staple or clip.

Preferably, the support plate is made of plastic material.

Also, according to a possible embodiment, the anchoring means of the support plate to the body of the vehicle comprise screws and nuts.

The present invention also relates to an inner cladding of a vehicle which incorporates a retention system for an electrical plug outlet as described above.

This cladding can be plastic or a type of carpet.

Likewise, as already mentioned, the present invention also relates to a retention method for an electrical plug outlet inside a vehicle, comprising the steps of:
a) anchoring a support plate to a body of the vehicle, wherein the support plate comprises a plug socket casing;
b) housing an electrical plug outlet in a first housing defined by the plug socket casing;
c) fixing a reinforcing plate to inner cladding of the vehicle;
d) positioning the inner cladding of the vehicle with respect to the body of the vehicle, wherein the step of positioning the inner cladding comprises mechanically attaching the reinforcing plate to the support plate by means of fixing means, and;
e) joining the inner cladding of the vehicle to the body of the vehicle by means of at least one joining means.

The use of the support plate allows the cladding, which incorporates the reinforcing plate, to be mechanically attached to the body of the vehicle. This will provide the necessary rigidity to the assembly to transmit the tensile stresses supported by the electrical plug outlet to the body. In addition, a simple process for assembling the retention system is sought. It must be taken into account that, once the cladding is fixed to the body, there is no possibility of accessing the unseen face of said cladding, therefore it is not possible to manipulate or make fixations on said unseen face of the cladding. The present invention seeks to take advantage of the operation of manipulating and fixing the cladding to the body to additionally fix the reinforcing plate to the support plate.

The specific joining means of the inner cladding of the vehicle to the body are independent of the retention system for the electrical plug outlet object of the present invention.

Preferably, the retention method comprises a step of housing a transformer in a second housing defined by the support plate. This transformer is configured to convert a direct current delivered by a battery of the vehicle into an alternating current.

According to a possible embodiment of the retention method, the step of fixing the reinforcing plate to the inner cladding of the vehicle is carried out by means of a welding process. Alternatively, this can be done by bi-injection.

According to a possible embodiment, the fixing means (to mechanically attach the reinforcing plate to the support plate) comprise at least one tab located on a perimeter edge of the reinforcing plate. These fixing means further comprise at least one protrusion located on one edge of the plug socket casing.

Preferably, the at least one tab comprises a proximal end substantially parallel to the perimeter edge of the reinforcing plate, and the at least one tab comprises a distal end arranged at a distance from the perimeter edge of the reinforcing plate greater than the distance from the proximal end.

Thus, preferably, the step of mechanically attaching the reinforcing plate to the support plate comprises:
- positioning the at least one protrusion between the distal end of the tab and the perimeter edge of the reinforcing plate;
- guiding the at least one protrusion from the distal end to the proximal end of the tab, and;
- housing the at least one protrusion between the proximal end of the tab and the perimeter edge of the reinforcing plate.

According to a possible embodiment, the retention method further comprises the steps of:
- removing the electrical plug outlet through an opening defined by a closed polygon geometry of the reinforcing plate;
- fixing the electrical plug outlet to an aesthetic cover;
- joining the aesthetic cover to the support plate, so that the electrical plug outlet is arranged in the opening defined by the closed polygon geometry of the reinforcing plate.

These last steps are the final steps, in other words, once the inner cladding of the vehicle is joined to the body of the vehicle.

### Brief description of the figures

The following figures have been included as part of the description of at least one embodiment of the invention.
Figure 1 shows a front view of an embodiment of the support plate.
Figure 2 shows a view of the support plate of Figure 1, with the transformer located on the support plate and wherein the electrical plug outlet is also shown in a position prior to the assembly thereof in the first housing defined by the plug socket casing of the support plate, and wherein the reinforcing plate and the aesthetic cover are also observed.
Figure 3 shows a view of the retention system for the electrical plug outlet of Figure 2, anchored to the body of a vehicle.
Figure 4 shows a view of the external appearance of the retention system for an electrical plug outlet assembled on the carpet cladding part, wherein only the reinforcing plate assembled on the cladding part is seen.
Figure 5 shows a schematic view of the initial process of assembling the cladding part with the reinforcing plate in its movement towards the support plate.
Figure 6 shows a view of the final process of assembling the cladding part with the reinforcing plate assembled on the support plate.
Figure 7 shows a side view of the upper tabs and protrusions for fixing the reinforcing plate to the support plate.
Figure 8 shows a side view of the lower tabs and protrusions for fixing the reinforcing plate to the support plate.
Figure 9 shows a view of a first embodiment of the retaining means of the electrical plug outlet in the plug socket casing of the support plate.
Figure 10 shows a view of a second embodiment of the retaining means of the electrical plug outlet in the plug socket casing of the support plate.

### Detailed description

The present invention relates, as mentioned above, to a retention system for an electrical plug outlet (102) in the interior of a vehicle.

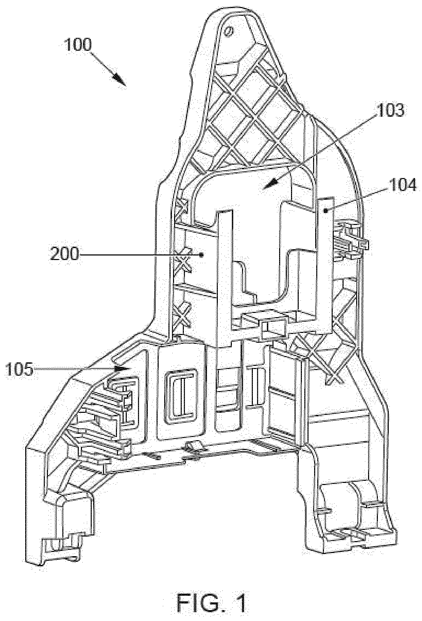

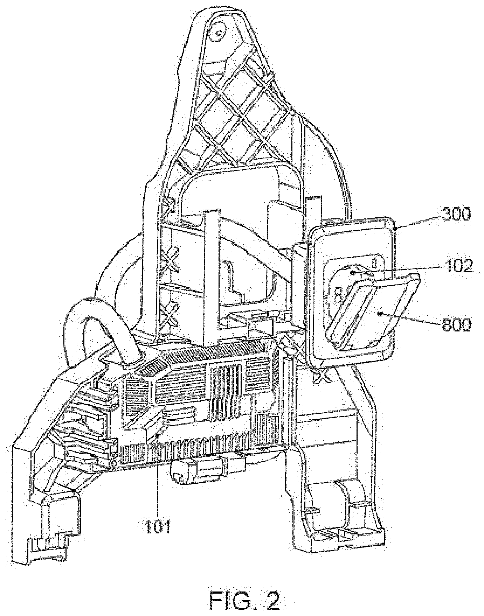

The retention system for an electrical plug outlet comprises (see Figure 1 and Figure 2) a support plate (100), configured to support a transformer (101). This transformer (101) is in charge of transforming the direct current (DC) at the output of the vehicle battery into an alternating current (AC) suitable for applications and devices to be plugged into the electrical plug outlet (102). Typically, said alternating current equals 230 V.

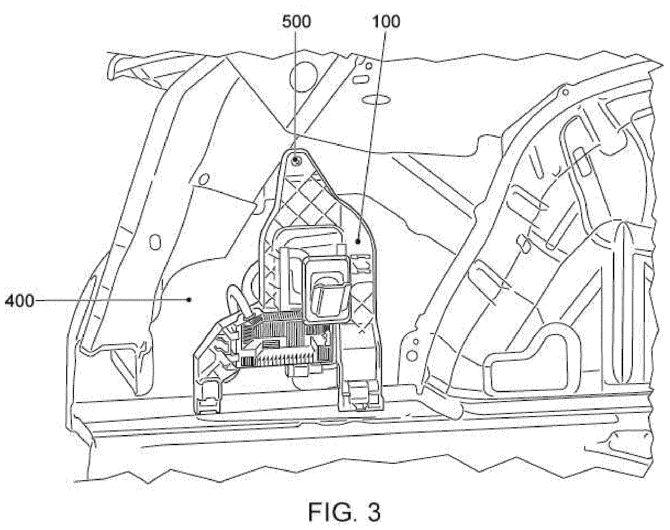

The support plate (100) is configured (see Figure 3) to be anchored to the body (400) or chassis of the vehicle. This anchoring of the support plate (100) is carried out by means of anchoring means (500) (typically screws and nuts). The function of the support plate (100) is to provide cavities to retain both the electrical plug outlet (102) and the transformer (101). Furthermore, it makes it possible to withstand the tensile stresses supported by the electrical plug outlet (102) in the operations of plugging and unplugging a connector to said electrical plug outlet (102) and transmitting said stresses to the body (400) of the vehicle.

The support plate (100) comprises a plug socket casing (200) that defines a first housing (103) configured to receive the electrical plug outlet (102).

The support plate (100) defines a second housing (105) to house the transformer (101).

The retention system for the electrical plug outlet (102) comprises a reinforcing plate (300), configured to be fixed to the support plate (100), on the flange (104) of the plug socket casing (200).

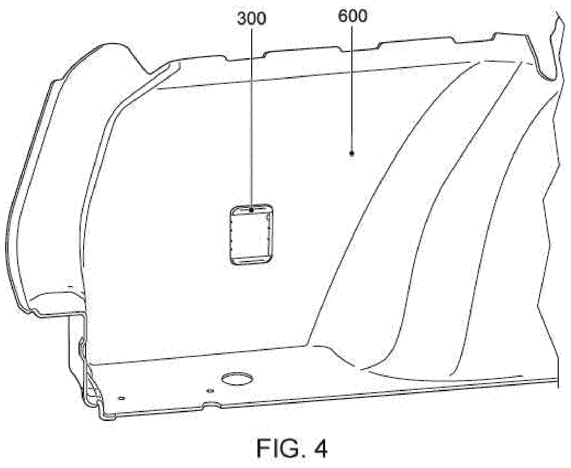

The reinforcing plate (300) is in turn configured to be adhered, fixed or welded to the inner carpet or cladding part (600) of the boot of a vehicle (see Figure 4). As seen in said figure, once the cladding 600 is fixed to the body (400) of the vehicle, an operator cannot access the unseen surface. The support plate (100), the transformer (101) and the fixings that enable the support plate (100) to be joined to both the body (400) and the reinforcing plate (300) are located on said unseen surface. Therefore, an operator cannot access or manipulate said components once the cladding (600) has been fixed to the body (400). Thus, the fixing of the support plate (100) with the reinforcing plate (300) occurs simultaneously with the operation of centring and assembling the cladding (600) on said body (400).

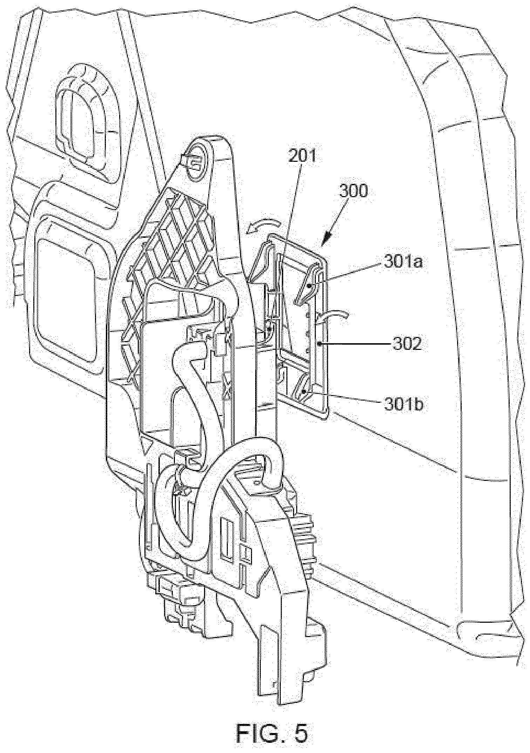

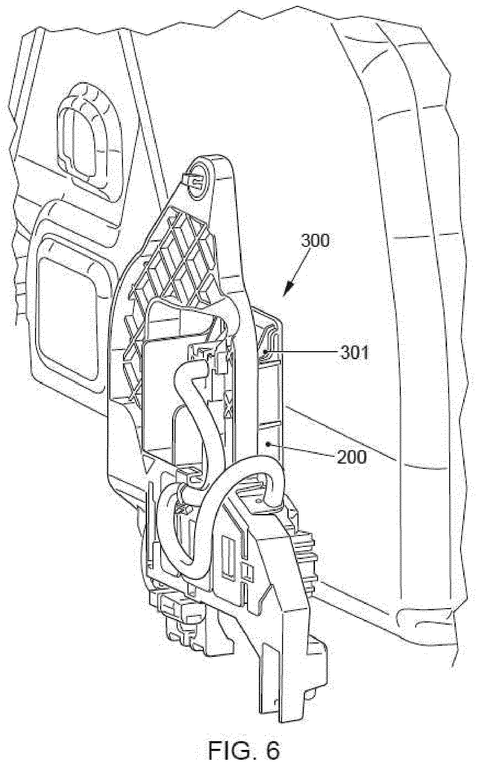

The reinforcing plate (300) comprises (see Figure 5 and Figure 6), in correspondence with a perimeter edge (302), tabs (301) (typically upper tabs (301a) and lower tabs (301b)), configured to fix the reinforcing plate (300) to the support plate (100), by means of protrusions (201) (typically upper protrusions (201a) and lower protrusions (201b)) existing on the flange (104) of the plug socket casing (200), where said protrusions (201) are configured to be introduced into the tabs (301) of said reinforcing plate (300). In this way, the flanges (301) are located on a surface of the perimeter edge (302) close to the support plate (100), the reinforcing plate (300) being in an assembled position with respect to the support plate (100). Similarly, the protrusions (201) are located on a surface of the plug socket casing (200) close to the reinforcing plate (300), the reinforcing plate (300) being in an assembled position with respect to the support plate (100). The position and arrangement of both the tabs (301) and the corresponding protrusions (201) enabling the reinforcing plate (300) to be fixed on the support plate (100) by means of a simple longitudinal movement.

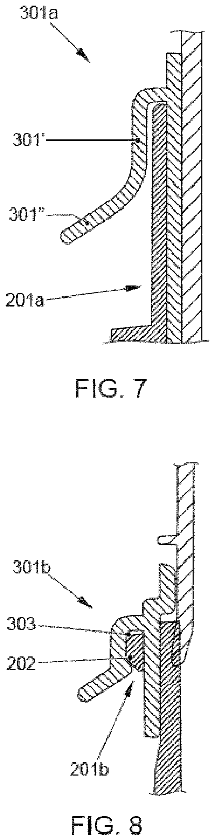

Preferably (see Figure 7 and Figure 8), the tabs (301) have a funnel or ramp-like shape, with a proximal end (301') closest to the perimeter edge (302) of the reinforcing plate (300) and a distal end (301‴) furthest from said perimeter edge (302), to ensure that the protrusion (201) is introduced into the tab (301) and to guide said protrusion (201) to a retaining position of the reinforcing plate (300) in the support plate (100). As can be seen, the protrusion (201) has at least one support surface with the perimeter edge (302) of the reinforcing plate (300), wherein said support surface extends in the longitudinal direction, in other words, in one direction substantially perpendicular to the insertion/removal efforts of the plug pin in the electrical plug outlet (102). In more detail, the protrusion (201) is arranged between the tab (301) and the perimeter edge (302) in said direction substantially perpendicular to the insertion/removal efforts of the plug pin in the electrical plug outlet (102), the reinforcing plate (300) being assembled on the support plate (100).

This fixation of the reinforcing plate (300) on the plug socket casing (200) of the support plate (100) ensures that, under the coupling and uncoupling efforts (insertion/removal) of the plug pin, the cladding (600) of the boot (the carpet part) does not deform or detach from the assembled position thereof. These insertion/removal efforts of the plug pin generally occur in a horizontal direction perpendicular to the horizontal direction of advance of the vehicle.

The protrusion (201) forms a flat surface which, when inserted into the tab (301) of the reinforcing plate, is trapped between two flat surfaces of the tab (301), typically between the proximal end (301') and an inner area of the tab (301), although it can also be trapped between the proximal end (301') of the tab (301) and the perimeter edge (302) of the reinforcing plate (300).

Preferably, the lower flanges (301b) comprise a recess (303) to couple a projection (202) of the protrusion (201) of the support plate (100), so that a retention in the vertical direction of the reinforcing plate (300) on the support plate (100) is also generated.

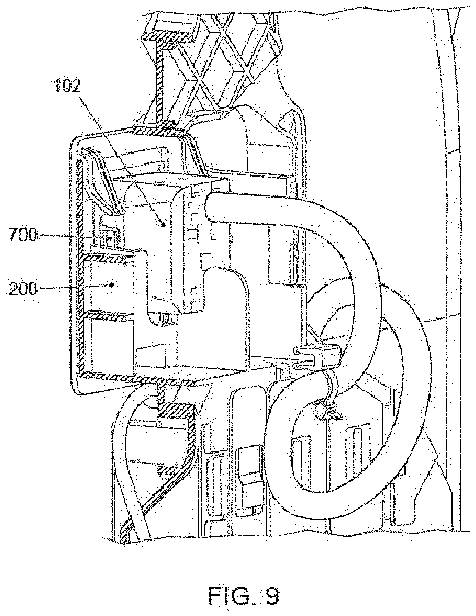

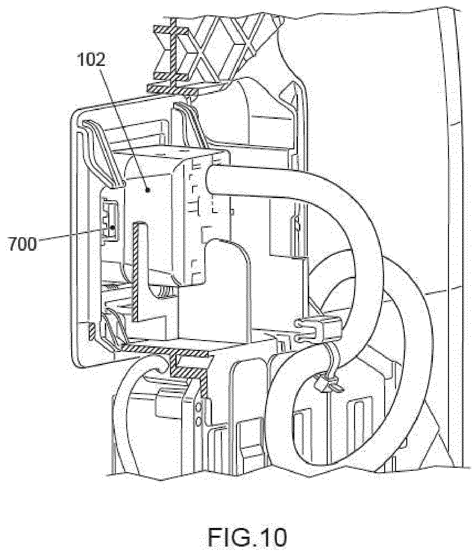

The electrical plug outlet (102) is introduced into the first housing (103) defined by the plug socket casing (200) of the support plate (100), and is retained by the support plate (100) in said plug socket casing (200), by means of retaining means (700), which can be materialised in a clip or a fixing clamp (see Figure 9 and Figure 10).

The reinforcing plate (300) and the support plate (100) are joined by means of a linear movement or translation of the cladding part (600) (carpet part) with respect to the support plate (100) (movement from top to bottom, as shown in the figures).

The electrical plug outlet (102) is preferably equipped with an aesthetic cover (800) (see Figure 2).

## Claims

1. A retention system for an electrical plug outlet (102) in the interior of a vehicle, the retention system comprising:
- a support plate (100) configured to be anchored to a body (400) of a vehicle by means of anchoring means (500); wherein the support plate (100) comprises a plug socket casing (200) defining a first housing (103) configured to receive the electrical plug outlet (102);
- a reinforcing plate (300), configured to be mechanically attached, in an assembled position, to the support plate (100) and configured to be fixed to a cladding part (600) inside the vehicle;
wherein the reinforcing plate (300) comprises a closed curve or closed polygon geometry such that it defines an opening to receive the electrical plug outlet (102) to be housed in the plug socket casing (200), and wherein the reinforcing plate (300) and the support plate (100) comprise fixing means for fixing the reinforcing plate (300) to a flange (104) of the plug socket casing (200);
wherein the plug socket casing (200) comprises retaining means (700) configured to retain the electrical plug outlet (102) in the first housing (103) of the support plate (100); **characterized in that** the retention system comprises joining means for joining the inner cladding (600) of the vehicle to the body (400) of the vehicle, such that the operation of centring and assembling the cladding (600), which incorporates the reinforcing plate (300) , on said body (400), occurs simultaneously to the fixing of the support plate (100) with the reinforcing plate (300).

2. The retention system according to claim 1, **characterised in that** the support plate (100) defines a second housing (105) configured to receive a transformer (101), wherein the transformer (101) is configured to convert a direct current delivered by a battery of the vehicle into an alternating current.

3. The retention system according to claims 1 or 2, **characterised in that** the fixing means for fixing the reinforcing plate (300) to the support plate (100) comprise at least one tab (301) located on a perimeter edge (302) of the reinforcing plate (300) that defines the opening, and wherein the fixing means comprise at least one protrusion (201) located on the flange (104) of the plug socket casing (200) and in correspondence with the at least one tab (301) of the reinforcing plate (300), wherein the at least one protrusion (201) is configured to be inserted into the at least one tab (301), thus preventing relative transverse displacement between the at least one protrusion (201) and the at least one tab (301), the reinforcing plate (300) being in the assembled position thereof.

4. The retention system according to claim 3, **characterised in that** the at least one tab (301) comprises a proximal end (301') substantially parallel to the perimeter edge (302) of the reinforcing plate (300) configured to receive the at least one protrusion (201).

5. The retention system according to claim 4, **characterised in that** the at least one tab (301) comprises a distal end (301") arranged at a distance from the perimeter edge (302) of the reinforcing plate (300) greater than the distance from the proximal end (301'), wherein the distal end (301") is configured to guide the at least one protrusion (201) during the assembly operation of the reinforcing plate (300) on the support plate (100).

6. The retention system according to claim 5, **characterised in that** the at least one tab (301) comprises a ramp-like structure between the proximal end (301') and the distal end (301"), such that the distance between the tab (301) and the perimeter edge (302) of the reinforcing plate (300) increases continuously between said proximal end (301') and said distal end (301").

7. The retention system according to any of claims 3 to 6, **characterised in that** the at least one tab (301) comprises a recess (303) and the at least one protrusion (201) comprises a projection (202), said projection (202) being configured to be retained by the recess (303) of the tab (301), thus preventing relative longitudinal displacement between the at least one protrusion (201) and the at least one tab (301).

8. The retention system according to any of the preceding claims, **characterised in that** the support plate (100) is made of plastic material.

9. An inner cladding of a vehicle **characterised in that** it comprises a retention system for an electrical plug outlet (102) as described in claims 1 to 8.

10. A retention method for an electrical plug outlet (102) in the interior of a vehicle, **characterised in that** it comprises the steps of:
a) anchoring a support plate (100) to a body (400) of the vehicle, wherein the support plate (100) comprises a plug socket casing (200);
b) housing an electrical plug outlet (102) in a first housing (103) defined by the plug socket casing (200) and retaining the electrical plug outlet (102) in the first housing (103) of the support plate (100) by means of retaining means (700);
c) fixing a reinforcing plate (300) to an inner cladding (600) of the vehicle;
d) positioning the inner cladding (600) of the vehicle, which incorporates the reinforcing plate (300), with respect to the body (400) of the vehicle, wherein the step of positioning the inner cladding (600) comprises mechanically attaching the reinforcing plate (300) to the support plate (100) by means of fixing means, and;
e) joining the inner cladding (600) of the vehicle to the body (400) of the vehicle by means of at least one joining means, such that the fixing of the support plate (100) with the reinforcing plate (300) occurs simultaneously with the operation of centring and assembling the cladding (600) on said body (400).

11. The retention method according to claim 10, **characterised in that** it comprises a step of housing a transformer (101) in a second housing (105) defined by the support plate (100), wherein the transformer (101) is configured to convert a direct current delivered by a battery of the vehicle into an alternating current.

12. The retention method according to any of claims 10 or 11, **characterised in that** the step of fixing the reinforcing plate (300) to the inner cladding (600) of the vehicle is carried out by means of a welding process.

13. The retention method according to any of claims 10 or 12, **characterised in that** the fixing means comprise at least one tab (301) located on a perimeter edge (302) of the reinforcing plate (300), and wherein the fixing means comprise at least one protrusion (201) located on a flange (104) of the plug socket casing (200), wherein the at least one tab (301) comprises a proximal end (301') substantially parallel to the perimeter edge (302) of the reinforcing plate (300), and wherein the at least one tab (301) comprises a distal end (301") arranged at a distance from the perimeter edge (302) of the reinforcing plate (300) greater than the distance from the proximal end (301'), wherein the step of mechanically attaching the reinforcing plate (300) to the support plate (100) comprises:
- positioning the at least one protrusion (201) between the distal end (301") of the tab (301) and the perimeter edge (302) of the reinforcing plate (300);
- guiding the at least one protrusion (201) from the distal end (301") to the proximal end (301') of the tab (301), and;
- housing the at least one protrusion (201) between the proximal end (301') of the tab (301) and the perimeter edge (302) of the reinforcing plate (300).

14. The retention method according to any of claims 10 to 12, **characterised in that** it further comprises the steps of:
- removing the electrical plug outlet (102) through an opening defined by a closed polygon geometry of the reinforcing plate (300);
- fixing the electrical plug outlet (102) to an aesthetic cover (800), and;
- joining the aesthetic cover (800) to the support plate (300), so that the electrical plug outlet (102) is arranged in the opening defined by the closed polygon geometry of the reinforcing plate (300).

## Patentansprüche

1. Rückhaltesystem für eine elektrische Steckdose (102) im Inneren eines Fahrzeugs, wobei das Rückhaltesystem Folgendes umfasst:
- eine Trägerplatte (100), die konfiguriert ist, um an einen Körper (400) eines Fahrzeugs mit Hilfe eines Ankermittels (500) verankert zu sein; wobei die Trägerplatte (100) ein Buchsengehäuse (200) umfasst, das ein erstes Gehäuse (103) definiert, das konfiguriert ist, um die elektrische Steckdose (102) aufzunehmen;
- eine Verstärkungsplatte (300), die konfiguriert ist, um in einer zusammengebauten Position mechanisch an die Trägerplatte (100) befestigt zu sein, und konfiguriert, um an einen Verkleidungsteil (600) im Fahrzeug fixiert zu sein;
wobei die Verstärkungsplatte (300) eine geschlossene Kurven- oder eine geschlossene Polygongeometrie umfasst, so dass sie eine Öffnung definiert, um die elektrische Steckdose (102) aufzunehmen, um im Buchsengehäuse (200) untergebracht zu sein, und wobei die Verstärkungsplatte (300) und die Trägerplatte (100) Fixierungsmittel umfassen, um die Verstärkungsplatte (300) an einen Flansch (104) des Buchsengehäuses (200) zu fixieren;
wobei das Buchsengehäuse (200) Rückhaltemittel (700) umfasst, die konfiguriert sind, um die elektrische Steckdose (102) im ersten Gehäuse (103) der Trägerplatte (100) zurückzuhalten;
**dadurch gekennzeichnet, dass** das Rückhaltesystem Verbindungsmittel umfasst, um die innere Verkleidung (600) des Fahrzeugs mit dem Körper (400) des Fahrzeugs zu verbinden, so dass der Vorgang des Zentrierens und Zusammenbauens der Verkleidung (600), der die Verstärkungsplatte (300) einfügt, auf dem Körper (400) gleichzeitig mit dem Fixieren der Trägerplatte (100) mit der Verstärkungsplatte (300) stattfindet.

2. Rückhaltesystem nach Anspruch 1, **dadurch gekennzeichnet, dass** die Trägerplatte (100) ein zweites Gehäuse (105) definiert, das konfiguriert ist, um einen Transformator (101) aufzunehmen, wobei der Transformator (101) konfiguriert ist, um einen Gleichstrom, der von einer Batterie des Fahrzeugs geliefert wird, in einem Wechselstrom umzuwandeln.

3. Rückhaltesystem nach Anspruch 1 oder 2, **dadurch gekennzeichnet, dass** die Fixierungsmittel zum Fixieren der Verstärkungsplatte (300) an die Trägerplatte (100) mindestens eine Lasche (301) umfassen, die sich auf einer Umfangskante (302) der Verstärkungsplatte (300) befindet, die die Öffnung definiert, und wobei die Fixierungsmittel mindestens einen Vorsprung (201) umfassen, der sich auf dem Flansch (104) des Buchsengehäuses (200) und in Verbindung mit der mindestens einen Lasche (301) der Verstärkungsplatte (300) befindet, wobei der mindestens eine Vorsprung (201) konfiguriert ist, um in die mindestens eine Lasche (301) eingeführt zu werden, wodurch eine relative Querbewegung zwischen dem mindestens einen Vorsprung (201) und der mindestens einen Lasche (301) verhindert wird, wodurch die Verstärkungsplatte (300) in der zusammengebauten Position davon ist.

4. Rückhaltesystem nach Anspruch 3, **dadurch gekennzeichnet, dass** die mindestens eine Lasche (301) ein proximales Ende (301') umfasst, das im Wesentlichen parallel zu Umfangskante (302) der Verstärkungsplatte (300) ist, das konfiguriert ist, um mindestens einen Vorsprung (201) aufzunehmen.

5. Rückhaltesystem nach Anspruch 4, **dadurch gekennzeichnet, dass** die mindestens eine Lasche (301) ein distales Ende (301 ") umfasst, das in einem Abstand von der Umfangskante (302) der Verstärkungsplatte (300) angeordnet ist, der größer als der Abstand vom proximalen Ende (301') ist, wobei das distale Ende (301") konfiguriert ist, um den mindestens einen Vorsprung (201) während des Zusammenbauvorgangs der Verstärkungsplatte (300) auf der Trägerplatte (100) zu führen.

6. Rückhaltesystem nach Anspruch 5, **dadurch gekennzeichnet, dass** die mindestens eine Lasche (301) eine rampenähnliche Struktur zwischen dem proximalen Ende (301') und dem distalen Ende (301") umfasst, so dass sich der Abstand zwischen der Lasche (301) und der Umfangskante (302) der Verstärkungsplatte (300) kontinuierlich zwischen dem proximalen Ende (301') und dem distalen Ende (301") erhöht.

7. Rückhaltesystem nach einem der Ansprüche 3 bis 6, **dadurch gekennzeichnet, dass** die mindestens eine Lasche (301) eine Aussparung (303) umfasst und der mindestens eine Vorsprung (201) eine Projektion (202) umfasst, wobei die Projektion (202) konfiguriert ist, um von der Aussparung (303) der Lasche (301) zurückgehalten zu werden, wodurch eine relative Längsverschiebung zwischen dem mindestens einen Vorsprung (201) und der mindestens einen Lasche (301) verhindert wird.

8. Rückhaltesystem nach einem der vorhergehenden Ansprüche, **dadurch gekennzeichnet, dass** die Trägerplatte (100) aus Kunststoffmaterial hergestellt ist.

9. Innenverkleidung eines Fahrzeugs, **dadurch gekennzeichnet, dass** sie ein Rückhaltesystem für eine elektrische Steckdose (102) umfasst, wie in den Ansprüchen 1 bis 8 beschrieben.

10. Rückhalteverfahren für eine elektrische Steckdose (102) im Inneren eines Fahrzeugs, **dadurch gekennzeichnet, dass** es die folgenden Schritte umfasst:
a) Verankern einer Trägerplatte (100) an einen Körper (400) des Fahrzeugs, wobei die Trägerplatte (100) ein Buchsengehäuse (200) umfasst;
b) Unterbringen einer elektrischen Steckdose (102) in einem ersten Gehäuse (103), das vom Buchsengehäuse (200) definiert ist, und Rückalten der elektrischen Steckdose (102) im ersten Gehäuse (103) der Trägerplatte (100) mit Hilfe von Rückhaltemitteln (700);
c) Fixieren einer Verstärkungsplatte (300) an eine Innenauskleidung (600) des Fahrzeugs;
d) Positionieren der Innenauskleidung (600) des Fahrzeugs, die die Verstärkungsplatte (300) einfügt, mit Bezug auf den Körper (400) des Fahrzeugs, wobei der Schritt des Positionierens der Innenauskleidung (600) das mechanische Befestigen der Verstärkungsplatte (300) an die Trägerplatte (100) mit Hilfe von Fixierungsmitteln umfasst, und
e) Verbinden der Innenverkleidung (600) des Fahrzeugs mit dem Körper (400) des Fahrzeugs mit Hilfe mindestens eines Verbindungsmittels, so dass die Fixierung der Trägerplatte (100) mit der Verstärkungsplatte (300) gleichzeitig mit dem Vorgang des Zentrierens und Zusammenbauens der Verkleidung (600) auf dem Körper (400) stattfindet.

11. Rückhalteverfahren nach Anspruch 10, **dadurch gekennzeichnet, dass** es einen Schritt des Unterbringens eines Transformators (101) in einem zweiten Gehäuse (105) umfasst, das durch die Trägerplatte (100) definiert ist, wobei der Transformator (101) konfiguriert ist, um einen Gleichstrom, der von einer Batterie des Fahrzeugs geliefert wird, in einem Wechselstrom umzuwandeln.

12. Rückhalteverfahren nach einem der Ansprüche 10 oder 11, **dadurch gekennzeichnet, dass** der Schritt des Fixierens der Verstärkungsplatte (300) an die Innenauskleidung (600) des Fahrzeugs mit Hilfe eines Schweißverfahrens durchgeführt wird.

13. Rückhalteverfahren nach einem der Ansprüche 10 oder 12, **dadurch gekennzeichnet, dass** die Fixierungsmittel mindestens eine Lasche (301) umfassen, die sich auf einer Umfangskante (302) der Verstärkungsplatte (300) befindet, und wobei die Fixierungsmittel mindestens einen Vorsprung (201) umfassen, der sich auf einem Flansch (104) des Buchsengehäuses (200) befindet, wobei die mindestens eine Lasche (301) ein proximales Ende (301') umfasst, das im Wesentlichen parallel zu Umfangskante (302) der Verstärkungsplatte (300) ist, wobei die mindestens eine Lasche (301) ein distales Ende (301") umfasst, das in einem Abstand von der Umfangskante (302) der Verstärkungsplatte (300) angeordnet ist, der größer als der Abstand vom proximalen Ende (301') ist, wobei der Schritt des mechanischen Befestigens der Verstärkungsplatte (300) auf die Trägerplatte (100) Folgendes umfasst:
- Positionieren des mindestens einen Vorsprungs (201) zwischen dem distalen Ende (301") der Lasche (301) und der Umfangskante (302) der Verstärkungsplatte (300);
- Führen des mindestens einen Vorsprungs (201) vom distalen Ende (301") zum proximalen Ende (301') der Lasche (301), und
- Unterbringen des mindestens einen Vorsprungs (201) zwischen dem proximalen Ende (301') der Lasche (301) und der Umfangskante (302) der Verstärkungsplatte (300).

14. Rückhalteverfahren nach einem der Ansprüche 10 bis 12, **dadurch gekennzeichnet, dass** es weiter die Folgenden Schritte umfasst:
- Entfernen der elektrischen Steckdose (102) durch eine Öffnung, die durch eine geschlossene Polygongeometrie der Verstärkungsplatte (300) definiert ist;
- Fixieren der elektrischen Steckdose (102) an eine ästhetische Abdeckung (800), und
- Verbinden der ästhetischen Abdeckung (800) mit der Stützplatte (300), so dass die elektrische Steckdose (102) in der Öffnung angeordnet ist, die durch eine geschlossene Polygongeometrie der Verstärkungsplatte (300) definiert ist.

## Revendications

1. Système de retenue pour une sortie de prise électrique (102) dans l'intérieur d'un véhicule, le système de retenue comprenant :
une plaque de support (100) configurée pour être ancrée à une carrosserie (400) d'un véhicule au moyen de moyens d'ancrage (500) ; dans lequel la plaque de support (100) comprend une prise de courant (200) définissant un premier logement (103) configuré pour recevoir la sortie de prise électrique (102) ;
une plaque de renforcement (300) configurée pour être mécaniquement fixée, dans une position assemblée, à la plaque de support (100) et configurée pour être fixée à une partie de revêtement (600) à l'intérieur du véhicule ;
dans lequel la plaque de renforcement (300) comprend une courbe fermée ou une géométrie polygonale fermée, de sorte qu'elle définit une ouverture pour recevoir la sortie de prise électrique (102) destinée à être logée dans la prise de courant (200), et dans lequel la plaque de renforcement (300) et la plaque de support (100) comprennent des moyens de fixation pour fixer la plaque de renforcement (300) à une bride (104) de la prise de courant (200) ;
dans lequel la prise de courant (200) comprend des moyens de retenue (700) configurés pour retenir la sortie de prise électrique (102) dans le premier logement (103) de la plaque de support (100) ;
**caractérisé en ce que** le système de retenue comprend des moyens d'assemblage pour assembler le revêtement interne (600) du véhicule à la carrosserie (400) du véhicule, de sorte que l'opération consistant à centrer et à assembler le revêtement (600), qui incorpore la plaque de renforcement (300), sur ladite carrosserie (400), a lieu simultanément à la fixation de la plaque de support (100) avec la plaque de renforcement (300).

2. Système de retenue selon la revendication 1, **caractérisé en ce que** la plaque de support (100) définit un second logement (105) configuré pour recevoir un transformateur (101), dans lequel le transformateur (101) est configuré pour convertir un courant continu délivré par une batterie du véhicule en un courant alternatif.

3. Système de retenue selon les revendications 1 ou 2, **caractérisé en ce que** les moyens de fixation pour fixer la plaque de renforcement (300) sur la plaque de support (100) comprennent au moins une languette (301) positionnée sur un bord périmétral (302) de la plaque de renforcement (300) qui définit l'ouverture, et dans lequel les moyens de fixation comprennent au moins une saillie (201) positionnée sur la bride (104) de la prise de courant (200) et en correspondance avec la au moins une languette (301) de la plaque de renforcement (300), dans lequel la au moins une saillie (201) est configurée pour être insérée dans la au moins une languette (301), empêchant ainsi le déplacement transversal entre la au moins une saillie (201) et la au moins une languette (301), la plaque de renforcement (300) étant dans sa position assemblée.

4. Système de retenue selon la revendication 3, **caractérisé en ce que** la au moins une languette (301) comprend une extrémité proximale (301') sensiblement parallèle au bord périmétral (302) de la plaque de renforcement (300) configurée pour recevoir la au moins une saillie (201).

5. Système de retenue selon la revendication 4, **caractérisé en ce que** la au moins une languette (301) comprend une extrémité distale (301") agencée à une distance du bord périmétral (302) de la plaque de renforcement (300) supérieure à la distance de l'extrémité proximale (301'), dans lequel l'extrémité distale (301") est configurée pour guider la au moins une saillie (201) pendant l'opération d'assemblage de la plaque de renforcement (300) sur la plaque de support (100).

6. Système de retenue selon la revendication 5, **caractérisé en ce que** la au moins une languette (301) comprend une structure en forme de rampe entre l'extrémité proximale (301') et l'extrémité distale (301 "), de sorte que la distance entre la languette (301) et le bord périmétral (302) de la plaque de renforcement (300) augmente de manière continue entre ladite extrémité proximale (301') et ladite extrémité distale (301").

7. Système de retenue selon l'une quelconque des revendications 3 à 6, **caractérisé en ce que** la au moins une languette (301) comprend un évidement (303) et la au moins une saillie (201) comprend un épaulement (202), ledit épaulement (202) étant configuré pour être retenu par l'évidement (303) de la languette (301), empêchant ainsi le déplacement longitudinal relatif entre la au moins une saillie (201) et la au moins une languette (301).

8. Système de retenue selon l'une quelconque des revendications précédentes, **caractérisé en ce que** la plaque de support (100) est réalisée à partir de matière plastique.

9. Revêtement interne d'un véhicule, **caractérisé en ce qu'**il comprend un système de retenue pour une sortie de prise électrique (102) selon les revendications 1 à 8.

10. Procédé de retenue pour une sortie de prise électrique (102) dans l'intérieur d'un véhicule, **caractérisé en ce qu'**il comprend les étapes consistant à :
a) ancrer une plaque de support (100) à une carrosserie (400) du véhicule, dans lequel la plaque de support (100) comprend une prise de courant (200) ;
b) loger une sortie de prise électrique (102) dans un premier logement (103) défini par la prise de courant (200) et retenir la sortie de prise électrique (102) dans le premier logement (103) de la plaque de support (100) au moyen des moyens de retenue (700) ;
c) fixer une plaque de renforcement (300) sur un revêtement interne (600) du véhicule ;
d) positionner le revêtement interne (600) du véhicule, qui incorpore la plaque de renforcement (300), par rapport à la carrosserie (400) du véhicule, dans lequel l'étape consistant à positionner le revêtement interne (600) comprend l'étape consistant à fixer mécaniquement la plaque de renforcement (300) sur la plaque de support (100) au moyen de moyens de fixation, et
e) assembler le revêtement interne (600) du véhicule à la carrosserie (400) du véhicule au moyen d'au moins un moyen d'assemblage, de sorte que la fixation de la plaque de support (100) avec la plaque de renforcement (300) se produit simultanément avec l'opération consistant à centrer et à assembler le revêtement (600) sur ladite carrosserie (400).

11. Procédé de retenue selon la revendication 10, **caractérisé en ce qu'**il comprend une étape consistant à loger un transformateur (101) dans un second logement (105) défini par la plaque de support (100), dans lequel le transformateur (101) est configuré pour convertir un courant continu délivré par une batterie du véhicule en un courant alternatif.

12. Procédé de retenue selon l'une quelconque des revendications 10 ou 11, **caractérisé en ce que** l'étape consistant à fixer la plaque de renforcement (300) au revêtement interne (600) du véhicule est réalisée au moyen d'un processus de soudage.

13. Procédé de retenue selon l'une quelconque des revendications 10 ou 12, **caractérisé en ce que** les moyens de fixation comprennent au moins une languette (301) positionnée sur un bord périmétral (302) de la plaque de renforcement (300) et dans lequel les moyens de fixation comprennent au moins une saillie (201) positionnée sur une bride (104) de la prise de courant (200), dans lequel la au moins une languette (301) comprend une extrémité proximale (301') sensiblement parallèle au bord périmétral (302) de la plaque de renforcement (300) et dans lequel la au moins une languette (301) comprend une extrémité distale (301") agencée à une distance du bord périmétral (302) de la plaque de renforcement (300) supérieure à la distance de l'extrémité proximale (301'), dans lequel l'étape consistant à fixer mécaniquement la plaque de renforcement (300) à la plaque de support (100) comprend les étapes consistant à :
positionner la au moins une saillie (201) entre l'extrémité distale (301") de la languette (301) et le bord périmétral (302) de la plaque de renforcement (300) ;
guider la au moins une saillie (201) de l'extrémité distale (301") à l'extrémité proximale (301') de la languette (301) ; et
loger la au moins une saillie (201) entre l'extrémité proximale (301') de la languette (301) et le bord périmétral (302) de la plaque de renforcement (300).

14. Procédé de retenue selon l'une quelconque des revendications 10 à 12, **caractérisé en ce qu'**il comprend en outre les étapes consistant à :
retirer la sortie de prise électrique (102) par une ouverture définie par une géométrie polygonale fermée de la plaque de renforcement (300) ;
fixer la sortie de prise électrique (102) sur un couvercle esthétique (800) ; et
assembler le couvercle esthétique (800) à la plaque de support (300), de sorte que la sortie de prise électrique (102) est agencée dans l'ouverture définie par la géométrie polygonale fermée de la plaque de renforcement (300).
